# EUROPEAN PATENT SPECIFICATION

(11) **EP 3 097 392 B1**
(45) Date of publication and mention of the grant of the patent: **28.11.2018**
(21) Application number: 15707799.1
(22) Date of filing: 23.01.2015
(51) Int. Cl.: G01F 23/288

(54) **PRESSURIZED APPARATUS EQUIPPED WITH A DEVICE FOR MEASURING A LIQUID LEVEL IN THE PRESSURIZED APPARATUS, IN PARTICULAR AN APPARATUS OF A UREA PLANT, AND METHOD FOR MEASURING A LIQUID LEVEL IN A PRESSURIZED APPARATUS**
DRUCKVORRICHTUNG AUSGERÜSTET MIT EINER VORRICHTUNG ZUR MESSUNG EINES FLÜSSIGKEITSSTANDES IN DER DRUCKVORRICHTUNG, DIE INSBESONDERE IN EINER HARNSTOFF-ANLAGE EINGESETZT WIRD, UND VERFAHREN ZUR MESSUNG EINES FLÜSSIGKEITSSTANDES IN EINER DRUCKVORRICHTUNG
APPAREIL SOUS PRESSION AVEC UN DISPOSITIF DE MESURE D'UN NIVEAU DE LIQUIDE DANS L'APPAREIL SOUS PRESSION, EN PARTICULIER UTILISÉ DANS UNE USINE D'URÉE, ET PROCÉDÉ DE MESURE D'UN NIVEAU DE LIQUIDE DANS UN APPAREIL SOUS PRESSION

(30) Priority: 23.01.2014 IT MI20140091
(43) Date of publication of application: 30.11.2016
(73) Proprietor: Saipem S.p.A., 20097 San Donato Milanese (Milano) (IT)
(72) Inventor: AVAGLIANO, Ugo, I-20097 San Donato Milanese (IT); CARLESSI, Lino, I-24044 Dalmine (IT)
(74) Representative: Cernuzzi, Daniele
(86) International application number: PCT/IB2015/050521
(87) International publication number: WO 2015/111000

(56) References cited:
- EP-A1- 2 123 633
- JP-A- H07 319 554
- US-A- 2 713 124
- US-A- 3 654 458
- US-A1- 2010 080 352
- US-A1- 2013 087 715

## Description

### TECHNICAL FIELD

The present invention relates to a pressurized apparatus equipped with a device for measuring a level of a liquid in the pressurized apparatus and a method for measuring a liquid level in a pressurized apparatus, in particular an apparatus of a urea plant.

In particular, the invention finds preferred application in apparatuses forming part of a high-pressure section of a urea plant, such as a stripper, a urea synthesis reactor, a carbamate separator, a carbamate condenser.

### BACKGROUND ART

The need to measure the level of liquids present in various apparatuses of a urea production plant (urea plant) is known. For example, it is known to measure the level of liquid present on the bottom of a high-pressure stripper (i.e. the apparatus of a high-pressure section of the urea plant in which carbamate is decomposed from a solution of urea leaving the urea synthesis reactor) by means of radioactive instruments.
This type of instrument generally has high reliability (greater than that of other types of instruments, such as radar instruments for example), does not need continual purging (as do differential-pressure piezoresistive electronic instruments, of the 'dP cell' type) and has good resolution.
The principle of operation of these instruments is based on measuring the radiation that, emitted by a radioactive source, is not absorbed by the liquid for which the level is to be measured and is detected by a receiver.

In the specific application regarding high-pressure strippers in a urea plant, in which it also necessary to consider that relatively thick walls are needed (as is usually the case with apparatuses operating at high pressure), two main types of solution are known:
a) a radioactive point source is used, this being located beneath the vessel (stripper container) inside which the level of liquid is to be measured; the receiver is positioned on the top part of the vessel. The radioactive source can also be installed inside the vessel, with the receiver positioned below it, in a recess of the bottom of the vessel. In any case, it is necessary to use a source of relatively high intensity because the absorption of radiation is an exponential function of the level; for this reason, this solution has few practical applications;
b) the radioactive source is installed inside the apparatus and is constituted by a wire or a series of point charges that emit along the entire length of the field to measure. The receiving unit is installed outside the apparatus and is generally constituted by two point receivers. This is the solution most adopted in urea plants.

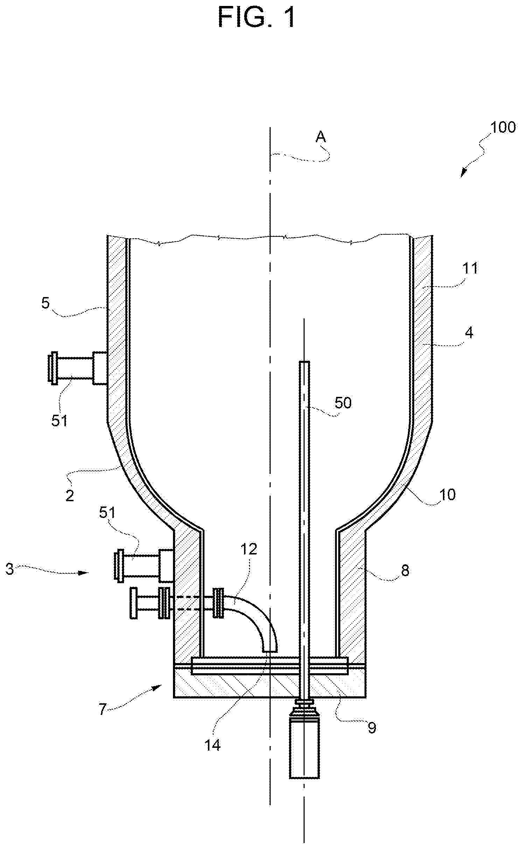

Figure 1 shows a typical application of this last type.
In fact, Figure 1 schematically and partially shows a high-pressure stripper 100 of a urea plant, in which only a bottom end part 2 is represented, equipped with a measuring device 3 for measuring the level of liquid present on the bottom of the stripper 100.

The stripper 100 comprises a container 4 having a side wall 5; the container 4 comprises, starting from a bottom end 7 of the stripper 100: a substantially cylindrical end portion 8, closed by a bottom wall 9; a curved intermediate portion 10 (for example, hemispheric); and a substantially cylindrical main portion 11.

The end portion 8 is fitted with an outlet duct 12, provided with an intake mouth 14 inside the container 4 that is normally immersed in the liquid present on the bottom of the stripper 100.
The measuring device 3 comprises an emission tube 50, which projects inside the container 4 through the bottom wall 9 and houses a radioactive source arranged along the emission tube (for example, constituted by a series of radioactive point charges or an elongated charge in the form of a wire or strip); and a pair of receivers 51, positioned outside the container 4 at respective predetermined levels (i.e. at respective distances from the bottom wall 9).
The liquid level in the stripper is measured by measuring the radiation emitted by the radioactive source that reaches the receivers.
Above all, due to the complex geometry of the stripper, more precisely the presence of a cylindrical end on which a curved (hemispheric) upper part is placed followed by a further cylindrical part, the known solution described herein has the drawback of poor measurement accuracy (defined as the smallest appreciable variation in the quantity under consideration throughout the entire measurement range) in the low-level zone, or rather where the level of the process liquid is maintained during normal operation of the apparatus.
The same drawback is encountered with other structurally similar apparatuses, such as for example the apparatus disclosed by US 2013/087715 A1, which also has a vertical emission tube, housing the radioactive source and projecting inside the container through a top wall; and vertically spaced receivers positioned outside the container and housed in respective nozzles formed in the lateral wall of the container.

Furthermore, US 2010/080352 A1 discloses an apparatus and method according to the preamble of claims 1 and 13, respectively, where both a tube containing a radioactive source and a tube containg a radiation detector are inserted into a container from its sides.

Furthermore, any measuring device configurations that contemplate radiation passing through the apparatus (in particular, the walls of the container of the apparatus, which, especially for pressurized applications, are relatively thick), require the use of relatively powerful radioactive sources, with all the related problems.

### DISCLOSURE OF INVENTION

One object of the present invention is therefore that of providing a device for measuring a level of a liquid in a pressurized apparatus, in particular an apparatus of a urea plant, which is substantially free of the drawbacks of the known art pointed out herein; in particular, one object of the invention is to provide a measuring device that enables using small and low-power radioactive sources, yet ensures high measurement resolution and accuracy.
The present invention therefore relates to a pressurized apparatus, in particular an apparatus of a urea plant, equipped with a device for measuring a liquid level in the pressurized apparatus, and to a method for measuring a level of a liquid in a pressurized apparatus, in particular an apparatus of a urea plant, as defined in fundamental terms in appended claims 1 and 13, respectively.

Additional preferred features of the invention are indicated in the dependent claims.
The main advantages attained by the device and the measurement method in accordance with the invention are the following.

The invention allows a significant improvement in measurement resolution and accuracy, especially in the low-level part, where it is more important to control and maintain the level of the process liquid from the process standpoint.

The invention also allows using radioactive sources with relatively low radioactivity (lower than those typical of known solutions), resulting in a consequent lowering of radiation intensity outside the apparatus, a huge advantage for the safety of exposed operators and which simplifies measures taken for their protection.

This invention also has the advantage of reducing the costs of the measuring device, which are directly proportional to the radioactivity of the radioactive source and the necessary transportation/containment system.

### BRIEF DESCRIPTION OF THE DRAWINGS

Further characteristics and advantages of the present invention will become clear from the description that follows of a non-limitative embodiment, with reference to the figures in the accompanying drawings, in which:
- Figure 1 is a schematic, longitudinal sectional view of a lower end part of a pressurized apparatus, specifically a high-pressure stripper of a urea plant, equipped with a liquid level measuring device according to the known technique;
- Figure 2 is a schematic, longitudinal sectional view of a lower end part of a pressurized apparatus, specifically a high-pressure stripper of a urea plant, equipped with a liquid level measuring device according to the invention;
- Figure 3 is a schematic, longitudinal sectional view of a pressurized apparatus, specifically a high-pressure stripper of a urea plant, equipped with a liquid level measuring device according to the invention.

### BEST MODE FOR CARRYING OUT THE INVENTION

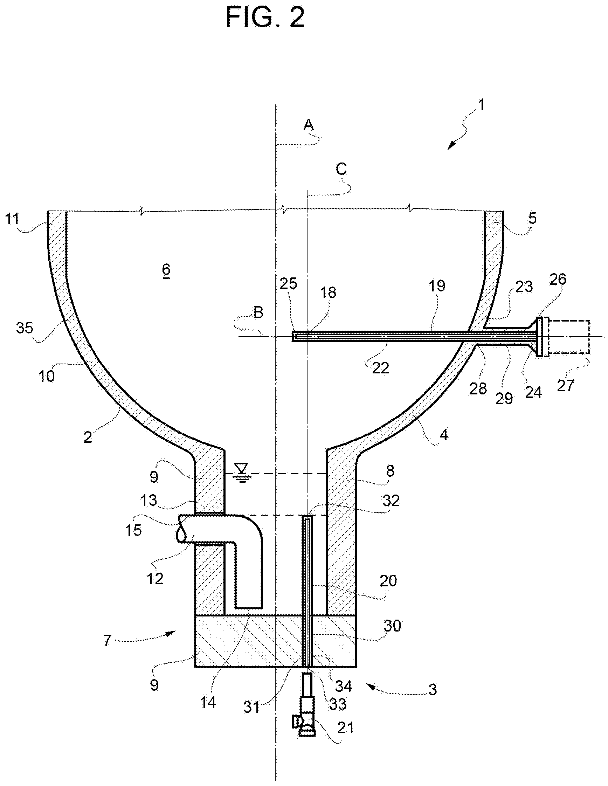

Figure 2 shows a pressurized apparatus 1, specifically a high-pressure stripper of a urea plant, of which only a bottom end part 2 is shown.

The apparatus 1 is equipped with a liquid level measuring device 3 for measuring the level of a process liquid that collects in part 2 of the apparatus 1.

Although the apparatus 1 in the example described and illustrated herein is a stripper, the measuring device 3 of the invention finds application, for example, in other apparatuses of the high-pressure section of a urea plant urea plant, such as, in particular, a urea synthesis reactor, a carbamate separator, or a carbamate condenser.

The apparatus 1 extends along an axis A (generally vertical in use) and comprises a container 4 having a side wall 5, positioned around axis A and delimiting an internal process chamber 6.

The container 4 comprises, starting from a bottom end 7 of the apparatus 1: a substantially cylindrical end portion 8, closed by a bottom wall 9, placed on end 7; a curved intermediate portion 10 (for example, substantially hemispheric), positioned above the end portion 8; and a substantially cylindrical main portion 11, positioned above the intermediate portion 10.

During normal operation of the apparatus 1, the bottom end part 2 of the apparatus 1 contains a certain amount of a process liquid, which reaches a level in the process chamber 6 defined by a free surface; the level of the process liquid in the apparatus 1 is variable, hence the need to measure this level and monitor its course over time.

The end portion 8 is fitted with an outlet duct 12, positioned through wall 5 of the container 4 and, in particular, through a hole 13 made in wall 5. Inside the container 4, the outlet duct 12 is provided with an intake mouth 14, positioned at a predetermined distance from wall 9 and normally immersed in the process liquid.

The outlet duct 12 has an elbow bend and the mouth 14 faces wall 9 at a level, measured as a distance from wall 9, lower than the level of hole 13 and, specifically, lower than the level of a top edge 15 of the outlet duct 12.

The measuring device 3 comprises: a radioactive source 18 that emits (nuclear) radiation; a charge-holder tube 19 that houses the source 18; a service tube 31 placed in a predetermined position with respect to the charge-holder tube 19; and a receiver 21 designed to receive and measure the radiation emitted by the source 18 and associated with the service tube 31.

The source 18 is a point source, namely a source that comprises a small-sized radioactive charge, similar to a point of emission.

The source 18 is positioned inside the charge-holder tube 19, which is defined by an internally hollow and substantially straight tubular element 22, placed through wall 5 of the container 4.

Depending on the size of the apparatus 1, the charge-holder tube 19 can be positioned on the main portion 11 or, preferably, on the intermediate portion 10 (as shown in Figure 2), or even on the end portion 8.

The charge-holder tube 19 is arranged substantially transversally to axis A and enters the apparatus 1 sideways and, in particular, enters inside the container 4 at a lateral end 23 of the apparatus 1; in the preferred embodiment shown in Figure 2, the charge-holder tube 19 is substantially horizontal.

In particular, the charge-holder tube 19 extends along a rectilinear longitudinal axis B (generically transversal to axis A and preferably perpendicular to axis A) between two axially opposite ends, specifically: an access end 24, located outside the container 4, and a free end 25, located inside the container 4 and in the process chamber 6 and at a distance from wall 5; the charge-holder tube 19 thus passes through wall 5 of the container 4 and projects inside the process chamber 6. The charge-holder tube 19 houses a single point source 18 positioned at the free end 25 and spaced out (i.e. positioned at a predetermined distance) from wall 5 through which the charge-holder tube 19 is inserted.

Preferably, the free end 25 is closed and the access end 24 terminates with an openable or removable connection 26 to allow access to the inside of the charge-holder tube 19 and the possible removal/replacement of the source 18, which for this purpose is optionally equipped with a handling system acting along axis B to translate the source in the charge-holder tube 19 along axis B. For example, the connection 26 is used to connect a housing 27 for the containment and transport of the source 18 to the outside of the container 4; the housing 27, equipped with a handling system via which the source 18 is brought inside the container 4 in the charge-holder tube 19, is fastened to the connection 26 in a removable manner; once the source 18 is exhausted, it is withdrawn in the housing 27, via the handling system, and the housing is then detached from the connection 26 and removed.

The charge-holder tube 19 is arranged passing through a hole 28 made in wall 5 and possibly passing through a nozzle 29 connected to the hole 28 and protruding outside the container 4.

The charge-holder tube 19 is fastened to the apparatus 1 by a flanged connection (according to the standards typical of urea plant apparatuses) or (as schematically shown in Figure 2) by a welded connection, if allowed by materials compatibility.

The charge-holder tube 19 is made of an appropriate material to resist the environment inside the apparatus 1, in this case to resist the corrosion-erosion phenomena of the high-pressure urea environment typical of a high-pressure stripper.

The internal diameter of the charge-holder tube 19 is determined according to the size of the source 18, as well as the handling system for the source 18.

The service tube 31, defined by an internally hollow and substantially straight tubular element 30, is arranged substantially vertical through wall 9.

The service tube 31 is arranged substantially parallel to axis A and enters the apparatus 1 and the container 4 vertically.

In particular, the service tube 31 extends along a longitudinal axis C (substantially parallel to axis A and perpendicular to axis B) between two axially opposite ends, specifically: a proximal end 31, located outside the container 4 or in wall 9; and a distal end 32, located inside the container 4 and in the process chamber 6 and spaced apart (i.e. set at a predetermined distance) from the wall 9 through which the service tube 31 is inserted; the service tube 31 thus passes through wall 9 and projects inside the process chamber 6.

Preferably, the distal end 32 is closed, while the proximal end 31 is open and has an opening 33.

The service tube 31 is arranged passing through a hole 34 made in wall 9 and is fastened to the apparatus 1, specifically to wall 9, by a flanged connection (according to the standards typical of urea plant apparatuses) or (as schematically shown in Figure 2) by a welded connection, if allowed by materials compatibility.

The service tube 31 is also made of an appropriate material to resist the environment inside the apparatus 1, in this case to resist the corrosion-erosion phenomena of the high-pressure urea environment typical of a high-pressure stripper.

Advantageously, the service tube 31 has an internal diameter of not less than approximately 25 mm.

The receiver 21 is installed on the outside of the container 4, specifically beneath wall 9. The measuring device 3 is equipped with a single receiver 21 (in addition to a single point source 18).

The receiver 21 is placed on the proximal end 31 of the service tube 31 and is aligned with axis C of the service tube 31; in particular, the receiver 21 faces the opening 33 of the proximal end 31, or is partially inserted in the opening 33.

In the preferred embodiment shown in Figure 2, axis C of the (vertical) service tube 31 perpendicularly intersects axis B of the (horizontal) charge-holder tube 19, at the source 18 (that is to say: the source 18 is positioned at the intersection of axes B and C, which are perpendicular to each other).

Furthermore, the source 18 is placed in the charge-holder tube 19 in a position such that the source 18 is substantially aligned with axis C of the service tube 31, and therefore with the receiver 21. In other words, the charge-holder tube 19 projects inside the container 4 and the process chamber 6 for a distance such that the source 18 is positioned on axis C of the service tube 31.

In this way, the distance between the source 18 that emits radiation and the receiver 21 that receives it is the shortest possible, thereby also allowing the use of radioactive charges of small size and power, such as, for example, 200 mCi of Cs-137 (with respect to traditional solutions that use 1000-1400 mCi of Cs-137).

In other embodiments, the source 18 is not exactly aligned with axis C of the service tube 31, but is in a slightly eccentric position with respect to it; and/or the charge-holder tube 19 and the service tube 31 (i.e. the respective axes B and C) are inclined and/or skewed with respect to each other (instead of being perpendicular); different configurations from the preferred one described above (in particular, for the position of the source 18 with respect to axis C of the service tube 31 and for the different inclinations between the charge-holder tube 19 and the service tube 31) still remain effective depending on the dimensions of the apparatus 1, of the charge-holder tube 19 and of the service tube 31, and on the type of source 18 and the performance of the receiver 21.

In any case, the radiation emitted by the source 18 does not have to pass through the high thickness of the apparatus 1 (specifically, the side wall 5 and/or the bottom wall 9) to reach the receiver 21, but must only cross the process liquid (as a function of the level present).

The service tube 31 arranged inside the end portion 8 thus enables reducing the distance between the radioactive charge and the receiver 21.

In consequence, the resolution of the measuring device 3 is excellent precisely in the low-level zone, and without deterioration in the higher level zones.

Optionally, the charge-holder tube 19 entirely crosses the process chamber 6 and is connected to wall 5 of the container 4 at a lateral end 35 opposite to the lateral end 23 fitted with the hole 28, and rests on a support or is fastened to wall 5 at end 35.

The length (measured along axis C) of the service tube 31, specifically the distance between the distal end 32 of the service tube 31 and the receiver 21, determines the zero level measurement of the measuring device 3.

Thus, the service tube 31 can have a different length according to the level range chosen for measurement.
The service tube 31 opportunely extends from wall 9 to the outlet duct 12 of the process liquid; specifically, the distal end 32 of the service tube 31 is placed at the same level as, i.e. flush with, the top edge 15 of the outlet duct 12.

In this way, the service tube 31 enables the receiver 21 to measure the level of the process liquid inside the apparatus 1, bypassing the portion of the process liquid present between wall 9 and the outlet duct 12; since this portion of process liquid is always present during normal operation of the apparatus 1, the ability to bypass this level (which constitutes a measurement offset) enables further reducing the charge of the source 18.

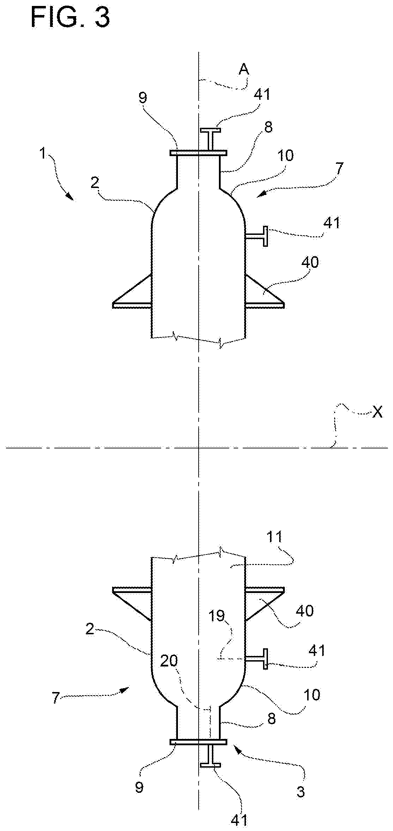

In the embodiment in Figure 3, the apparatus 1 (an apparatus of a urea plant, for example, a high-pressure stripper) is configured so that it can be installed in two opposite operating positions, rotated by 180° about a horizontal axis of symmetry X of the apparatus 1, and the measuring device 3 can be mounted on the apparatus 1 in both operating positions, without requiring substantial modifications to the apparatus 1 and, in particular, to its container 4.

The apparatus 1 extends along axis A (vertical in use) between two opposite longitudinal ends 7 and is symmetrical with respect to axis X (horizontal); in particular, the container 4 has a symmetrical shape with respect to axis X and is fitted with support members 40, symmetrical and specular with respect to axis X, to selectively support the apparatus 1 in the two operating positions.

In greater detail, the container 4 has two opposite end parts 2, situated at respective ends 7 and is symmetrical with respect to axis X (horizontal).

The end parts 2 have respective substantially cylindrical end portions 8, closed by respective bottom walls 9; and respective curved intermediate portions 10 (for example, substantially hemispheric). The main portion 11 of the substantially cylindrical container joins the intermediate portions 10.

The end parts 2 are fitted with respective groups of nozzles 41 to be used for connecting the apparatus 1 to external circuit and/or components.

The nozzles 41 are provided in pairs, symmetrical with respect to axis X, so that the nozzles 41 of each pair can be selectively used in the two operating positions of the apparatus 1.

In other words, the nozzles 41 placed at the two ends 7 are also symmetrical with respect to axis X.

The nozzles 41 can be used, in particular, for mounting the measuring device 3.

For simplicity, only two pairs of nozzles 41 destined for mounting the measuring device 3 are shown in Figure 3, while additional nozzles 41 utilizable for inserting other components, such as the outlet duct 12 for example, are not shown.

In each operating position of the apparatus 1, the charge-holder tube 19 that houses the source 18 and the service tube 31 can be inserted in respective nozzles 41 located at one end 7 and in one end part 2, specifically at the end 7 and in the end part 2 that are the lower ones in that operating position of the apparatus 1.

When the apparatus 1 is turned upside down about axis X (for example, to extend the useful life of the apparatus 1), the opposite end 7 also has nozzles 41 in the same positions required for mounting the measuring device 3; in consequence, the measuring device 3 can be mounted without modifying the container 4.

Finally, it is understood that further modifications and variants can be made to the measuring device described and illustrated herein without departing from the scope of the appended claims.

## Claims

1. A pressurized apparatus (1), in particular an apparatus of a urea plant, equipped with a device (3) for measuring a level of a liquid in the pressurized apparatus (1), the measuring device comprising a radioactive source (18), positioned inside a container (4) of the apparatus (1) in which the liquid level has to be measured; a receiver (21), apt to receive and measure the radiation emitted by the source (18) and positioned outside the container (4); a charge-holder tube (19) that houses the source (18) and projects inside the container (4) to support the source (18) inside the container (4), the charge-holder tube being positioned through a side wall of the container and being substantially horizontal; and a service tube (20), which is positioned through a wall (9) of the container (4) and has a proximal end (31), located outside the container (4) and facing towards the receiver (21), and a distal end (32), facing towards the source (18), the service tube (20) projecting inside the container (4) and the distal end (32) of the service tube (20) being located inside the container (4) and spaced apart from said wall (9),
**characterized in that**
the service tube (20) is positioned through a bottom wall (9) of the container (4), and is substantially vertical; and the receiver (21) is positioned below said bottom wall (9) and facing an opening (33) of the proximal end (31) of the service tube (20), or is partially inserted in said opening (33).

2. An apparatus according to claim 1, wherein the source (18) is a point source.

3. An apparatus according to claim 1 or 2, wherein the service tube (20) is defined by an internally hollow tubular element (22).

4. An apparatus according to one of the preceding claims, wherein the receiver (21) is positioned at the proximal end (31) of the service tube (20) and is aligned with a longitudinal axis (C) of the service tube (20).

5. An apparatus according to one of the preceding claims, wherein the source (18) is placed in the charge-holder tube (19) in a position such that the source (18) is substantially aligned to a longitudinal axis (C) of the service tube (20).

6. An apparatus according to one of the preceding claims, wherein the charge-holder tube (19) and the service tube (20) extend along respective longitudinal axes (B, C), substantially perpendicular to each other.

7. An apparatus according to one of the preceding claims, wherein the charge-holder tube (19) and the service tube (20) extend along respective longitudinal axes (B, C) that intersect with each other.

8. An apparatus according to one of the preceding claims, wherein the distal end (32) of the service tube (20) is positioned substantially at the same level of a top edge (15) of an outlet duct (12) of the apparatus (1).

9. An apparatus according to one of the preceding claims, wherein the apparatus is an apparatus of a urea plant.

10. An apparatus according to claim 9, wherein the apparatus (1) is an apparatus that is part of a high-pressure section of the urea plant, in particular a stripper, a urea synthesis reactor, a carbamate separator, or a carbamate condenser.

11. A urea production plant, comprising at least one pressurized apparatus (1) equipped with a device (3) for measuring a liquid level in the apparatus; and **characterized in that** the apparatus (1) is an apparatus according to one of claims 1 to 8.

12. A plant according to claim 11, comprising at least one high pressure section and wherein the apparatus (1) is an apparatus that is part of said high-pressure section, in particular a stripper, a urea synthesis reactor, a carbamate separator, or a carbamate condenser.

13. A method for measuring a level of a liquid in a pressurized apparatus (1), in particular an apparatus of a urea plant, comprising the steps of: arranging a radioactive source (18) inside a container (4) of the apparatus (1) in which the liquid level has to be measured and supporting the source (18) with a charge-holder tube (19) which projects inside the container (4), the charge-holder tube being positioned through a side wall of the container and being substantially horizontal; arranging a receiver (21), apt to receive and measure the radiation emitted by the source (18), outside the container (4); providing a service tube (20) through a wall (9) of the container (4), the service tube (20) having a proximal end (31), located outside the container (4) and facing towards the receiver (21), and a distal end (32), facing towards the source (18), the service tube projecting inside the container, and the distal end of the service tube being located inside the container and spaced apart from said wall; and measuring the radiation, emitted by the source (18), which reaches the receiver (21) by passing through the liquid contained in the container (4); **characterized in that**: the service tube (20) is positioned through a bottom wall (9) of the container (4), and is substantially vertical; and the receiver (21) is positioned below said bottom wall (9) and facing an opening (33) of the proximal end (31) of the service tube (20), or is partially inserted in said opening (33).

14. A method according to claim 13, wherein the source (18) is a point source.

15. A method according to claim 13 or 14, wherein the service tube (20) is defined by an internally hollow tubular element (22).

16. A method according to one of claims 13 to 15, wherein the receiver (21) is positioned at the proximal end (31) of the service tube (20) and is aligned with a longitudinal axis (C) of the service tube (20).

17. A method according to one of claims 13 to 16, wherein the source (18) is positioned in the charge-holder tube (19) in a position such that the source (18) is substantially aligned to a longitudinal axis (C) of the service tube (20).

18. A method according to one of claims 13 to 17, wherein the charge-holder tube (19) and the service tube (20) extend along respective longitudinal axes (B, C), substantially perpendicular to each other.

19. A method according to one of claims 13 to 18, wherein the charge-holder tube (19) and the service tube (20) extend along respective longitudinal axes (B, C) that intersect with each other.

20. A method according to one of claims 13 to 19, wherein the distal end (32) of the service tube (20) is positioned substantially at the same level of a top edge (15) of an outlet duct (12) of the apparatus (1).

21. An apparatus according to one of claims 1 to 10, wherein the apparatus (1) is configured so that it can be installed in two opposite operating positions, rotated by 180° with respect to each other about a horizontal axis (X) of symmetry of the apparatus (1), and the measuring device (3) is mountable on the apparatus (1) in both operating positions.

22. An apparatus according to claim 21, wherein the apparatus (1) is provided with two groups of nozzles (41) located at respective opposite longitudinal ends (7) of the apparatus (1); the nozzles (41) being arranged in pairs symmetric with respect to the horizontal axis (X) of symmetry, so as the nozzles (41) of each pair can be used selectively in the two operating positions of the apparatus (1) for mounting the measuring device (3).

## Patentansprüche

1. Druckeinrichtung (1) insbesondere eine Einrichtung einer Harnstoff-Anlage, ausgestattet mit einer Vorrichtung (3) zum Messen eines Flüssigkeitsstandes in der Druckeinrichtung (1), wobei die Messvorrichtung eine radioaktive Quelle (18) umfasst, die in einem Behälter (4) der Einrichtung (1) positioniert ist, in dem der Flüssigkeitsstand zu messen ist; einen Empfänger (21), der geeignet ist, die von der Quelle (18) abgegebene Strahlung zu messen, und der außerhalb des Behälters (4) positioniert ist; ein Ladungshalterohr (19), das die Quelle (18) aufnimmt und in den Behälter (4) ragt, um die Quelle (18) innerhalb des Behälters (4) zu stützen, wobei das Ladungshalterohr durch die Seitenwand des Behälters positioniert ist und im Wesentlichen horizontal ist; und ein Service-Rohr (20), das durch eine Wand (9) des Behälters (4) positioniert ist und ein Proximalende (31) aufweist, das sich außerhalb des Behälters (4) befindet und zum Empfänger (21) weist, und ein Distalende (32), das zur Quelle (18) weist, wobei das Service-Rohr (20) in den Behälter (4) ragt und das Distalende (32) des Service-Rohrs (20) sich im Behälter (4) befindet und von der Wand (9) einen bestimmten Abstand hat, **dadurch gekennzeichnet, dass**
das Service-Rohr (20) durch eine Bodenwand (9) des Behälters (4) positioniert und im Wesentlichen vertikal ist; und der Empfänger (21) unterhalb der Bodenwand (9) positioniert ist und zu einer Öffnung (33) des Proximalendes (31) des Service-Rohrs (20) weist oder zum Teil in die Öffnung (33) eingeführt ist.

2. Einrichtung nach Anspruch 1, wobei die Quelle (18) eine Punktquelle ist.

3. Einrichtung nach Anspruch 1 oder 2, wobei das Service-Rohr (20) durch ein innen hohles röhrenförmiges Element (22) bestimmt ist.

4. Einrichtung nach einem der vorangehenden Ansprüche, wobei der Empfänger (21) am Proximalende (31) des Service-Rohrs (20) positioniert und mit der Längsachse (C) des Service-Rohrs (20) ausgerichtet ist.

5. Einrichtung nach einem der vorangehenden Ansprüche, wobei die Quelle (18) in dem Ladungshalterohr (19) in einer Position angeordnet ist, dass die Quelle (18) im Wesentlichen mit der Längsachse (C) des Service-Rohrs (20) ausgerichtet ist.

6. Einrichtung nach einem der vorangehenden Ansprüche, wobei das Ladungshalterohr (19) und das Service-Rohr (20) sich entlang jeweiliger Längsachsen (B, C) im Wesentlichen senkrecht zueinander erstrecken.

7. Einrichtung nach einem der vorangehenden Ansprüche, wobei das Ladungshalterohr (19) und das Service-Rohr (20) sich entlang jeweiliger Längsachsen (B, C) erstrecken, die sich schneiden.

8. Einrichtung nach einem der vorangehenden Ansprüche, wobei das Distalende (32) des Service-Rohrs (20) im Wesentlichen auf der gleichen Höhe eines oberen Rands (15) eines Auslasskanals (12) der Einrichtung (1) positioniert ist.

9. Einrichtung nach einem der vorangehenden Ansprüche, wobei die Einrichtung eine Einrichtung einer Harnstoff-Anlage ist.

10. Einrichtung nach Anspruch 9, wobei die Einrichtung (1) eine Einrichtung ist, die Teil einer Hochdruckeinheit der Harnstoff-Anlage ist, insbesondere eines Strippers, eines Harnstoffsynthesereaktors, eines Carbamat-Separators oder eines Carbamat-Kondensators.

11. Harnstoffproduktionsanlage, die mindestens eine Druckeinrichtung (1) umfasst, die mit einer Vorrichtung (3) für das Messen des Flüssigkeitsstandes in der Einrichtung ausgestattet ist; und **dadurch gekennzeichnet, dass** die Einrichtung (1) eine Einrichtung nach einem der Ansprüche 1 bis 8 ist.

12. Anlage nach Anspruch 11, die mindestens eine Hochdruckeinheit umfasst und wobei die Einrichtung (1) eine Einrichtung ist, die Teil der Hochdruckeinheit ist, insbesondere eines Strippers, eines Harnstoffsynthesereaktors, eines Carbamat-Separators oder eines Carbamat-Kondensators.

13. Verfahren für das Messen eines Flüssigkeitsstandes in einer Druckeinrichtung (1), insbesondere einer Einrichtung für eine Harnstoff-Anlage, das folgende Schritte umfasst: Anordnen einer radioaktiven Quelle (18) in einem Behälter (4) der Einrichtung (1), in dem der Flüssigkeitsstand zu messen ist und in dem die Quelle (18) mit einem Ladungshalterohr (19) gestützt wird, das in den Behälter (4) ragt, wobei das Ladungshalterohr durch eine Seitenwand des Behälters positioniert und im Wesentlichen horizontal ist; Anordnen eines Empfängers (21), der geeignet ist, die von der Quelle (18) abgegebene Strahlung zu messen, außerhalb des Behälters (4); Vorsehen eines Service-Rohrs (20) durch eine Wand (9) des Behälters (4), wobei das Service-Rohr (20) ein Proximalende (31) aufweist, das sich außerhalb des Behälters (4) befindet und zum Empfänger (21) weist, und ein Distalende (32), das zur Quelle (18) weist, wobei das Service-Rohr in den Behälter ragt, und das Distalende des Service-Rohrs innerhalb des Behälters angeordnet ist und einen Abstand zur Wand hat; und Messen der Strahlung, die von der Quelle (18) abgegeben wird, die den Empfänger (21) erreicht, indem sie durch die im Behälter (4) vorhandene Flüssigkeit dringt; **dadurch gekennzeichnet, dass**:
das Service Rohr (20) durch eine Bodenwand (9) des Behälters (4) positioniert und im Wesentlichen vertikal ist; und der Empfänger (21) unter der Bodenwand (9) positioniert ist und zu einer Öffnung (33) des Proximalendes (31) des Service-Rohrs (20) weist oder zum Teil in diese Öffnung (33) eingeführt ist.

14. Verfahren nach Anspruch 13, wobei die Quelle (18) eine Punktquelle ist.

15. Verfahren nach Anspruch 13 oder 14, wobei das Service-Rohr (20) durch ein innen hohles röhrenförmiges Element (22) definiert ist.

16. Verfahren nach einem der Ansprüche 13 bis 15, wobei der Empfänger (21) am Proximalende (31) des Service-Rohrs (20) positioniert und mit einer Längsachse (C) des Service-Rohrs (20) ausgerichtet ist.

17. Verfahren nach einem der Ansprüche 13 bis 16, wobei die Quelle (18) im Ladungshalterohr (19) in einer solchen Position positioniert ist, dass die Quelle (18) im Wesentlichen mit einer Längsachse (C) des Service-Rohrs ausgerichtet ist.

18. Verfahren nach einem der Ansprüche 13 bis 17, wobei das Ladungshalterohr (19) und das Service-Rohr (20) sich entlang jeweiliger Längsachsen (B, C) im Wesentlichen senkrecht zueinander erstrecken.

19. Verfahren nach einem der Ansprüche 13 bis 18, wobei das Ladungshalterohr (19) und das Service-Rohr (20) sich entlang jeweiliger Längsachsen (B, C) erstrecken, die sich schneiden.

20. Verfahren nach einem der Ansprüche 13 bis 19, wobei das Distalende (32) des Service-Rohrs (20) im Wesentlichen auf der gleichen Höhe eines oberen Rands (15) eines Auslasskanals (12) der Einrichtung (1) positioniert ist.

21. Einrichtung nach einem der Ansprüche 1 bis 10, wobei die Einrichtung (1) so ausgestaltet ist, dass sie in zwei gegenüberliegenden Betriebspositionen installiert werden kann, zueinander um 180° um eine horizontale Symmetrieachse (X) der Einrichtung (1) verdreht, und dass die Messvorrichtung (3) in beiden Betriebspositionen auf der Einrichtung (1) montierbar ist.

22. Einrichtung nach Anspruch 21, wobei die Einrichtung (1) mit zwei Gruppen von Düsen (41) versehen ist, die sich an den jeweils gegenüberliegenden Längsenden (7) der Einrichtung (1) befinden; wobei die Düsen (41) in Paaren angeordnet sind, die bezüglich der horizontalen Symmetrieachse (X) symmetrisch sind, sodass die Düsen (41) jedes Paares selektiv in den beiden Betriebspositionen der Einrichtung (1) für die Montage der Messvorrichtung (3) verwendet werden können.

## Revendications

1. Appareil sous pression (1), en particulier un appareil d'une usine d'urée, équipé d'un dispositif (3) pour mesurer un niveau d'un liquide dans l'appareil sous pression (1), le dispositif de mesure comprenant une source radioactive (18), positionnée à l'intérieur d'un contenant (4) de l'appareil (1) dans lequel le niveau de liquide doit être mesuré ; un récepteur (21), apte à recevoir et mesurer le rayonnement émis par la source (18) et positionné à l'extérieur du contenant (4) ; un tube de support de charge (19) qui abrite la source (18) et fait saillie à l'intérieur du contenant (4) pour porter la source (18) à l'intérieur du contenant (4), le tube de support de charge étant positionné à travers une paroi latérale du contenant et étant sensiblement horizontal ; et un tube de service (20), qui est positionné à travers une paroi (9) du contenant (4) et a une extrémité proximale (31), située à l'extérieur du contenant (4) et orientée vers le récepteur (21), et une extrémité distale (32), orientée vers la source (18),
le tube de service (20) faisant saillie à l'intérieur du contenant (4) et l'extrémité distale (32) du tube de service (20) étant située à l'intérieur du contenant (4) et espacée de ladite paroi (9), **caractérisé en ce que**
le tube de service (20) est positionné à travers une paroi inférieure (9) du contenant (4) et est sensiblement vertical ; et le récepteur (21) est positionné sous ladite paroi inférieure (9) et orienté face à une ouverture (33) de l'extrémité proximale (31) du tube de service (20), ou est partiellement inséré dans ladite ouverture (33).

2. Appareil selon la revendication 1, dans lequel la source (18) est une source ponctuelle.

3. Appareil selon la revendication 1 ou 2, dans lequel le tube de service (20) est défini par un élément tubulaire creux à l'intérieur (22).

4. Appareil selon l'une des revendications précédentes, dans lequel le récepteur (21) est positionné au niveau de l'extrémité proximale (31) du tube de service (20) et est aligné avec un axe longitudinal (C) du tube de service (20).

5. Appareil selon l'une des revendications précédentes, dans lequel la source (18) est placée dans le tube de support de charge (19) dans une position telle que la source (18) est sensiblement alignée avec un axe longitudinal (C) du tube de service (20).

6. Appareil selon l'une des revendications précédentes, dans lequel le tube de support de charge (19) et le tube de service (20) s'étendent le long d'axes longitudinaux respectifs (B, C), sensiblement perpendiculaires l'un à l'autre.

7. Appareil selon l'une des revendications précédentes, dans lequel le tube de support de charge (19) et le tube de service (20) s'étendent le long d'axes longitudinaux respectifs (B, C) qui se coupent mutuellement.

8. Appareil selon l'une des revendications précédentes, dans lequel l'extrémité distale (32) du tube de service (20) est positionnée sensiblement au même niveau d'un bord supérieur (15) d'une conduite de sortie (12) de l'appareil (1).

9. Appareil selon l'une des revendications précédentes, dans lequel l'appareil est un appareil d'une usine d'urée.

10. Appareil selon la revendication 9, dans lequel l'appareil (1) est un appareil qui fait partie d'une section à haute pression de l'usine d'urée, en particulier un rectificateur, un réacteur de synthèse d'urée, un séparateur de carbamate, ou un condensateur de carbamate.

11. Usine de production d'urée, comprenant au moins un appareil sous pression (1) équipé d'un dispositif (3) pour mesurer un niveau de liquide dans l'appareil ; et **caractérisé en ce que** l'appareil (1) est un appareil selon l'une des revendications 1 à 8.

12. Usine selon la revendication 11, comprenant au moins une section à haute pression et dans laquelle l'appareil (1) est un appareil qui fait partie de ladite section à haute pression, en particulier un rectificateur, un réacteur de synthèse d'urée, un séparateur de carbamate, ou un condensateur de carbamate.

13. Procédé pour mesurer un niveau d'un liquide dans un appareil sous pression (1), en particulier un appareil d'une usine d'urée, comprenant les étapes de :
agencement d'une source radioactive (18) à l'intérieur d'un contenant (4) de l'appareil (1) dans lequel le niveau de liquide doit être mesuré et portant la source (18) avec un tube de support de charge (19) qui fait saillie à l'intérieur du contenant (4), le tube de support de charge étant positionné à travers une paroi latérale du contenant et étant sensiblement horizontal ;
agencement d'un récepteur (21), apte à recevoir et mesurer le rayonnement émis par la source (18), à l'extérieur du contenant (4) ; fourniture d'un tube de service (20) à travers une paroi (9) du contenant (4), le tube de service (20) ayant une extrémité proximale (31), située à l'extérieur du contenant (4) et orientée vers le récepteur (21), et une extrémité distale (32), orientée vers la source (18), le tube de service faisant saillie à l'intérieur du contenant, et l'extrémité distale du tube de service étant située à l'intérieur du contenant et espacée de ladite paroi ; et
mesure du rayonnement, émis par la source (18), qui atteint le récepteur (21) en traversant le liquide contenu dans le contenant (4) ;
**caractérisé en ce que** :
le tube de service (20) est positionné à travers une paroi inférieure (9) du contenant (4) et est sensiblement vertical ; et le récepteur (21) est positionné sous ladite paroi inférieure (9) et orienté face à une ouverture (33) de l'extrémité proximale (31) du tube de service (20), ou est partiellement inséré dans ladite ouverture (33).

14. Procédé selon la revendication 13, dans lequel la source (18) est une source ponctuelle.

15. Procédé selon la revendication 13 ou 14, dans lequel le tube de service (20) est défini par un élément tubulaire creux à l'intérieur (22).

16. Procédé selon l'une des revendications 13 à 15, dans lequel le récepteur (21) est positionné au niveau de l'extrémité proximale (31) du tube de service (20) et est aligné avec un axe longitudinal (C) du tube de service (20).

17. Procédé selon l'une des revendications 13 à 16, dans lequel la source (18) est positionnée dans le tube de support de charge (19) dans une position telle que la source (18) est sensiblement alignée avec un axe longitudinal (C) du tube de service (20).

18. Procédé selon l'une des revendications 13 à 17, dans lequel le tube de support de charge (19) et le tube de service (20) s'étendent le long d'axes longitudinaux respectifs (B, C), sensiblement perpendiculaires l'un à l'autre.

19. Procédé selon l'une des revendications 13 à 18, dans lequel le tube de support de charge (19) et le tube de service (20) s'étendent le long d'axes longitudinaux respectifs (B, C) qui se coupent mutuellement.

20. Procédé selon l'une des revendications 13 à 19, dans lequel l'extrémité distale (32) du tube de service (20) est positionnée sensiblement au même niveau d'un bord supérieur (15) d'une conduite de sortie (12) de l'appareil (1).

21. Appareil selon l'une des revendications 1 à 10, dans lequel l'appareil (1) est configuré de sorte qu'il puisse être installé dans deux positions de fonctionnement opposées, pivotées de 180° l'une par rapport à l'autre autour d'un axe horizontal (X) de symétrie de l'appareil (1), et le dispositif de mesure (3) peut être monté sur l'appareil (1) dans les deux positions de fonctionnement.

22. Appareil selon la revendication 21, dans lequel l'appareil (1) est doté de deux groupes de buses (41) situés à des extrémités longitudinales opposées (7) respectives de l'appareil (1) ; les buses (41) étant agencées par paires symétriques par rapport à l'axe horizontal (X) de symétrie, de façon à ce que les buses (41) de chaque paire puissent être utilisées sélectivement dans les deux positions de fonctionnement de l'appareil (1) pour monter le dispositif de mesure (3).
